# EUROPEAN PATENT SPECIFICATION

(11) **EP 2 906 089 B1**
(45) Date of publication and mention of the grant of the patent: **07.11.2018**
(21) Application number: 13733313.4
(22) Date of filing: 03.07.2013
(51) Int. Cl.: A47J 31/36

(54) **BEVERAGE MACHINE**
GETRÄNKEMASCHINE
MACHINE POUR PRÉPARER DES BOISSONS

(30) Priority: 09.10.2012 EP 12187762
(43) Date of publication of application: 19.08.2015
(73) Proprietor: Nestec S.A., 1800 Vevey (CH)
(72) Inventor: KOLLEP, Alexandre, 1095 Lutry (CH); FLICK, Jean-Marc, 1405 Pomy (CH); BONACCI, Enzo, 1073 Savigny (CH)
(74) Representative: Sacroug, Olivier
(86) International application number: PCT/EP2013/064001
(87) International publication number: WO 2014/056641

(56) References cited:
- WO-A1-2006/013124
- WO-A1-2006/013124
- FR-A1- 2 907 766
- FR-A1- 2 907 766

## Description

### Field of the Invention

The field of the invention pertains to beverage preparation machines, in particular using capsules of an ingredient of the beverage to be prepared, such as beverage preparation machines having a passage for inserting a beverage ingredient into the machine, in particular an ingredient supplied in the form of a preportioned ingredient capsule, and a member for covering and uncovering the passage to allow insertion of a capsule into the passage, as desirable during normal use of the machine.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

An example of a machine for preparing a beverage from a flavouring concentrate that is contained in a reservoir and that is mixed with a liquid from another reservoir is disclosed in US 2003/0200871.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Brewing devices have been developed to facilitate insertion of a "fresh" capsule and removal of the capsule upon use. Typically, the brewing devices comprise two parts relatively movable from a configuration for inserting/removing a capsule to a configuration for brewing the ingredient in the capsule.

The actuation of the movable part of the brewing device may be motorized. Such a system is for example disclosed in EP 1 767 129. In this case, the user does not have to provide any manual effort to open or close the brewing device. The brewing device has a capsule insertion passage provided with a safety door assembled to the movable part of the brewing device via a switch for detecting an undesired presence of a finger in the passage during closure and prevent injuries by squeezing. Further motorized brewing devices are disclosed in WO 2012/025258, WO 2012/025259, WO 2012/093108 and in PCT/EP12/073324.

The actuation of the movable part of the brewing device may be manual. WO 2009/043630 discloses a beverage preparation machine including a brewing unit having a front part with a passage having a mouth for inserting a capsule into the brewing unit. The front part is arranged to telescope out of the machine's housing for uncovering the passage for inserting a capsule into the brewing unit and telescopes into the brewing unit for sliding the passage under the housing and thus covering the passage by the housing. A pivotable arched handle is configured for driving the front part manually. In another embodiment, the telescoping front part is helicoidally movable about an axis perpendicular to the capsule insertion passage and parallel to the passage's mouth, the mouth of the passage being delimited by the telescoping front part and sliding with the front part under the machine's outermost housing by which it is covered in the closed position and uncovered in the open position.

WO 2005/004683 and WO 2007/135136 disclose a device comprising a frame, a fixed holding part for the capsule, a movable holding part which is mounted relative to the frame in a sliding relationship, one or two knuckle joint mechanisms that provide a mechanical system which enables to close in a steady and fluid-tight manner the holding parts about the capsule while also resisting to the counter-force acting while re-opening and generated by the internal brewing pressure, and a handle for directly levering the knuckle joint mechanism. Such a device forms a simple assembly enabling insertion of the capsule by vertical fall through a passage in the frame and removal of the used capsule in the same direction as the insertion direction. The handle is in the form of a lever that is manually pivotable about an end thereof adjacent the machine's housing. In the closed position, the handle may be pivoted down against the machine's housing and over the capsule inlet passage to cover it. In the open position, the handle is pivoted up away from the capsule inlet passage to uncover this passage. Hence, in addition to moving the holding part, the handle serves to cover and uncover the passage for the capsule. The manual force required to move the movable parts varies during closure and opening of the machine and depends on the dimensional tolerances of the capsules used, the positioning of the capsule and the temperature of the brewing unit. Further covers for covering and uncovering such a passage for the capsule are disclosed WO 2012/093107 and PCT/EP13/054006.

WO 2012/126971 discloses yet another cover for covering and uncovering such a passage. In this document, the cover is pivotable about a pivoting axis that is generally parallel to the insertion direction and/or that is generally perpendicular to the mouth of the ingredient passage. The ingredient mouth and the ingredient passage can be configured to receive and guide an ingredient capsule, the passage and the mouth having a slide for guiding a guiding flange of the capsule to the ingredient processing module. The cover can have a planar portion that covers and uncovers the ingredient passage, the planar cover portion being arranged to pivot generally in its own plane. The cover may have a cover opening, such as a window, pivotable: over the passage to permit insertion of the ingredient through the opening into the ingredient processing module via the passage; and away from the passage to prevent insertion of said ingredient through the opening into the processing module. Further state of the art documents are: WO 2006/013124 and FR 2 907 766.

### Summary of the Invention

It is an object of the present invention to provide a machine for preparing a beverage that has a compact positioner adapted to receive and hold an ingredient capsule and to feed such a capsule to a beverage processing module.

The invention relates to a machine for preparing a beverage from at least one ingredient capsule and dispensing such prepared beverage. For instance, the machine is a coffee, tea, chocolate, cacao, milk or soup preparation machine. In particular, the machine is arranged for preparing within a processing module a beverage by passing hot or cold water or another liquid through a capsule containing an ingredient, such as a flavouring ingredient, of the beverage to be prepared, such as ground coffee or tea or chocolate or cacao or milk powder.

Such beverage preparation typically includes the mixing of a plurality of beverage ingredients, e.g. water and milk powder, and/or the infusion of a beverage ingredient, such as an infusion of ground coffee or tea with water. For instance, a predetermined amount of beverage is formed and dispensed on user-request, which corresponds to a serving. The volume of such a serving may be in the range of 25 to 200 ml, e.g. the volume for filling a cup or mug, depending on the type of beverage. Formed and dispensed beverages may be selected from ristrettos, espressos, lungos, cappuccinos, cafe latte, americano coffees, teas, etc... For example, a coffee machine may be configured for dispensing espressos, e.g. an adjustable volume of 20 to 60 ml per serving, and/or for dispensing lungos, e.g. a volume in the range of 70 to 150 ml per serving.

Typically, the ingredient is contained in a capsule having an aluminium or plastic or paper enclosure and supplied within the capsule to the processing module of the machine.

In particular, the machine comprises: an ingredient capsule processing module having a chamber for processing the capsule therein; a passage for a transfer of the capsule to the chamber; and a capsule positioner having at least one member which delimits a seat for receiving a capsule, the movable member(s) being movable from a position for receiving and holding the capsule to a position for releasing the capsule into the passage

In an embodiment, the capsule positioner has at least one member that is pivotable about a pivoting axis from a position for receiving and holding the capsule (the first position) to a position for releasing the capsule (the second position) into the passage.

The passage can be generally upright so that the capsule is movable in the passage under the effect of gravity. The passage may comprise an insertion portion guiding the capsule to the chamber of the processing module and an evacuation portion guiding the capsule away from the chamber of the processing module. The capsule positioner is normally associated with the insertion portion. The passage is normally adjacent to capsule positioner.

Typically, the beverage preparation machine comprises a stationary structure, such as a housing and/or a frame. The structure may be arranged to rest on a support surface such as a table. The passage may be stationary relative to the structure. The capsule positioner is typically located at a top part of the stationary structure.

For instance, the passage extends from the processing module towards the capsule positioner at an outer face of the structure, e.g. outer housing. In other words, the processing module can be at a distance from the outside of the machine, in particular from a machine's outer housing surface. The passage may be any kind of arrangement for passing a capsule from the capsule positioner to the processing module.

The passage can have a mouth for the insertion of the capsule which then passes from the mouth along the passage, along an insertion direction, to the processing module. The passage's mouth is formed by an end portion of the passage and can be adjacent the capsule positioner. Hence the passage is generally parallel to the insertion direction. The mouth of the passage, i.e. the opening through which the ingredient is inserted into the passage, can have a notional or virtual mouth area or mouth plane (typically delimited by the boundaries of an end of the passage) through which the capsule is inserted. This notional mouth area or plane is usually generally perpendicular to the passage, i.e. perpendicular to the insertion direction, or it may be at a non-perpendicular angle thereto, usually of more than 45 deg, e.g. from 60 or 75 to less than 90 deg.

The processing module can have a configuration for processing the ingredient capsule and a configuration of transfer of the ingredient capsule, e.g. insertion of the capsule into the processing module and/or removal of the capsule from the processing module, in particular into a waste ingredient collector.

The machine can comprise a motor for driving the processing module: from a configuration for processing the ingredient capsule; to an open configuration for inserting such capsule into the processing module and/or removing said capsule therefrom; and/or vice versa.

The processing module typically has a first assembly and a second assembly movable relative to the first assembly from a position for housing therein a capsule to a transfer position for inserting a capsule into the processing module and/or for evacuation thereof from the processing module. Examples of such processing modules are disclosed in EP 1 859 714, EP 2 103 236, EP 2 205 133, WO 2012/025258, PCT/EP12/073324 and in the references cited therein. The first and second relatively movable assemblies may be relatively movable manually, semi-automatically and/or automatically, in particular by an electric motor. In the context of the present invention, "assembly" may refer to a single component assembling different functions, e.g. mechanical guiding function, mechanical holding function, mechanical piercing function, flow function, pressure function, etc..., and/or refer to a plurality of components assembling the desired function(s). The second assembly of the processing module can be made movable relative to the first assembly and relative to the stationary structure. The first assembly may be stationary relative to the structure or movable thereto. The second assembly can be arranged to move in a direction, in particular an arched and/or linear direction. Typically, the first and second assemblies in their processing position delimit a chamber for housing the ingredient capsule, such as tea or coffee or chocolate or powder milk capsule. The ingredient processing module may include an upstream fluid circuit for delivering a carrier liquid, such as water, into the chamber and a downstream fluid circuit having a beverage outlet for delivering from the chamber the beverage formed by the carrier liquid that is flavoured by the beverage (flavouring) ingredient of the capsule.

At least one of the first and second assemblies may be connected to the at least one movable member so that a relative movement of the first and second assemblies causes movement of the movable member(s), and/or vice-versa. The first and second assemblies can be connected to the movable member(s) by at least one of:
- a data processing link, such as an electric control unit in particular a unit controlling at least one automatic actuator actuating at least one of the first and second assemblies and the movable member(s), the actuator being optionally selected from electric, hydraulic and/or pneumatic actuators, such as one or more electric motors;
- a mechanical movement transmission, in particular comprising at least one of: gears, e.g. wheels and racks, such as spur and/or friction gears; cam followers and cams; cranks and crank shafts; and
- a magnetic movement transmission, in particular comprising an electromagnet and/or a permanent magnet.

Relative movement of the first and second assemblies into the closed position may cause movement of the movable member(s) into its receiving and holding position, and/or vice versa. Relative movement of the first and second assemblies into the open position can cause movement of the movable member (s) into its releasing position, and/or vice versa.

For instance, the assemblies are moved into one position manually or by a powered actuator and then moved into another position by a return spring that is stressed by the movement into the first position. Likewise, the movable member(s) may be moved manually, semi-automatically and/or automatically.

The movable member(s) may be associated with an automatic return device for driving the member(s) into a stable position, in particular into the receiving and holding position and/or into the releasing position. The automatic return device may be a bistable device for driving the movable member(s) into two different positions, in particular into the receiving and holding position and into the releasing position.

Manual or semi-manual/automatic actuation of the movable member(s) may be direct or indirect, i.e. a user may directly actuate the member(s), e.g. pushing or pulling the member(s), or actuate a distant part that is connected to the member(s), e.g. via a mechanical transfer mechanism such as a gear, belt or cam system. The member(s) may have a shape that allows a user, e.g. via the hand or one or more fingers, to manually seize it or push it for moving it between the receiving and holding position and the releasing position during normal use. For example the member(s) has/have a portion with a surface structure or composition, in particular an anti-skid surface that provides friction against a human hand to reduce the necessary gripping force needed to achieve a reliable user-control of the member(s).

The movable member(s) may form a user-interface, in particular a user-interface for controlling the ingredient processing module.

In accordance with the invention, the movable member(s) is/are arranged to: hold the capsule generally vertically above the passage in the receiving and holding position; and drop the capsule generally vertically from the capsule positioner into the passage in the releasing position.

For instance, the transfer of the capsule extends along a generally straight and generally vertical direction from a position of said capsule when held by the movable member(s) along the passage. In this context, a "generally straight" direction means a direction that is contained within a cylinder of a diameter of 5 or 10 mm or less; a generally vertical direction means a direction that is vertical or at an angle to the vertical direction of less than 15 or 25 deg.

The capsule may be transferred via the passage to an intermediate position for being handled by the processing module into an extraction configuration in the processing module. Upon extraction, the processing module may bring the capsule into a removal configuration from where the capsule is manually and/or automatically, e.g. under the effect of gravity or another force, ejected for instance to a used capsule collector.

As opposed to prior art covering handles, e.g. as disclosed in WO 2007/135136, which are pivotable between a position extending along the machine housing to cover the passage and a position angled away therefrom to uncover the passage, the machine of the present invention does not need a significant volume of free space adjacent the machine's housing for the pivoting of the cover. Moreover, such prior art pivotable handles do not receive and hold ingredient capsules. Similar considerations apply to WO 2012/126971 wherein a capsule is moved around by a capsule positioner on top of the beverage machine before being released to the machine's processing module.

In one embodiment, the movable member(s) is/are pivotable about (a) pivoting axis that extend (s) through an area occupied by the capsule when held by the at least one member. Such an area can be delimited, at least in part, by a capsule reception and holding recess formed by the pivotable member(s). At least one movable member can be located: in its member position for receiving and holding the capsule, between the capsule-occupiable area and the passage; and in its member position for releasing the capsule into the passage, sideways this area and passage and/or above this area. For instance, a pivotable member can be in the shape and mounted like a swing, the recess being for instance delimited by the base (seat) and suspending arms of the swing and the pivoting axis being located on the suspending arms at a distance of the seat. For example, the pivoting axis of the pivotable member(s) extend(s): generally perpendicularly to a transfer direction of the capsule along the passage; and/or generally parallelly to a machine housing at the capsule positioner. Alternatively, the pivoting axis may extend generally parallelly to the passage or generally perpendicularly to a machine housing.

At least one movable member may form a shell, in particular a shell that is pivotally mounted at an extremity of the shell.

Thus, at least one member can be pivotable between the receiving and holding position and the releasing position, in particular pivotable about a pivoting axis that is distant from the seat. At least one member may be pivotable from the receiving and holding position to the releasing position by an angle of less than 100 deg, in particular less than 75 deg, such as less than 45 deg, more particularly less than 30 deg, for example less than 15 or 10 deg.

At least one member may be movable in a straight direction or pivotally, for instance sequentially move along a straight direction and then pivotally or vice versa.

The machine can have a stationary outer envelope, such as a frame or a housing portion or virtual boundaries, at which the movable member(s) is/are located in the receiving and holding position, the movable member(s) being confined within the envelope in the releasing position. Hence, in such a particular configuration the machine does not require more space during operation than when it is not in operation.

The machine typically has a mouth, in particular a mouth in an outer envelope of such machine, for an insertion of the capsule into the seat in the receiving and holding position, the movable member(s) being movable away from the mouth when moved from the receiving and holding position to the releasing position. For instance, the movable member(s) form(s) (a) trap door(s) adjacent to the mouth. Such a trap door may be pivotally and/or slidably mounted adjacent to the mouth. When the movable member(s) is pivotally mounted, it may be arranged to pivot into the capsule transfer passage.

The movable member(s) can be pivotable:
- away from a mouth, in particular a mouth in an outer envelope of such machine, about a pivoting axis that is generally perpendicular to the mouth, optionally distant from the mouth, or generally parallel to the mouth; and/or
- about an axis of the at least one pivotable member, which axis extends: generally parallelly to a transfer direction of the capsule along the capsule transfer passage; and/or generally perpendicularly to a machine housing at the capsule positioner and/or generally parallelly to the passage.

In a particular embodiment, the capsule positioner comprises two or more movable members that are movable together above the passage into the receiving and holding position and movable apart from above the passage into the releasing position. For instance, the capsule positioner comprises two movable members, in particular generally plate-shaped members, each having a pivoting axis (the two axis may be identical or separate), the movable members being in a general scissor configuration that can be closed into the receiving and holding position and opened into the releasing position. Two members may be pivotable in opposite directions about the pivoting axis and/or movable in opposite straight directions.

The seat can have a shape configured to generally match a shape of the capsule. The shape of the seat may be configured to bring the capsule in the right orientation for the insertion and processing of the ingredient capsule, e.g. to discriminate the appropriate orientation of an asymmetric capsule at insertion.

The capsule may have a guiding flange, e.g. a rim, and a body that is, symmetric or asymmetric, conical or frusto-conical or cylindrical or spherical or hemispherical or frusto-spherical, containing the ingredient, e.g. ground coffee, tea or cacao or another beverage ingredient. The guiding flange may be deformed during the guiding process, e.g. urged beyond reference members or stop members.

Suitable examples of capsules and capsule handling mechanisms retrofittable inside the beverage machine of the invention are disclosed in EP 1 859 714, EP 2 103 236, EP 2 205 133, WO 2012/025258, PCT/EP12/073324 and in the references cited therein.

For instance, the seat has a shape that is generally conical or cylindrical to match a correspondingly shaped capsule body. The seat may have guides arranged to match a correspondingly shaped capsule flange, in particular a rim of a lid closing a capsule body.

The machine may include guiding means for guiding the capsule in the passage. For instance, the guiding means comprise guide members guiding a capsule flange and/or being associated with stop members for stopping said capsule, in particular stopping the capsule flange, in a position for being handled by the processing module. The capsule positioner may have a seat that has guides for guiding said capsule, in particular a capsule flange, into the guiding means in the passage.

In an embodiment, the capsule positioner and the passage and the processing module are adapted to handle a capsule of a first type and of a second type. The capsule positioner may include a first guide for guiding a flange of the first capsule type and a second guide for guiding a flange of the second capsule type. The processing module can include assemblies adapted for an insertion of a capsule of a first type and of a second type when the assemblies are in an open position, the processing module being arranged to adapt the configuration of the assemblies or of the brewing chamber according to a size of the capsule. Examples of such processing modules are disclosed in co-pending applications EP 2012187716.1, EP 2012187717.9, EP 2012187718.7, EP 2012197961.1 and EP 2012189153.5.

Hence, the capsule positioner and the passage and the ingredient processing module can be adapted to handle a capsule of a first type and of a second type. For example:
- The capsule positioner comprises a first guide for guiding a flange of the first capsule type and a second guide for guiding a flange of the second capsule type.
- The processing module includes assemblies adapted for a selective insertion of a capsule of a first type or of a second type when the assemblies are in an open position, the processing module being arranged to adapt the configuration of the assemblies and/or of the brewing chamber according to the type of the inserted capsule.

The capsule positioner is usually located above the ingredient processing module and the passage. Optionally, the capsule positioner, the ingredient processing module and the passage are configured so that said capsule can be driven by gravity from the capsule positioner to the processing module.

Hence, the beverage preparation machine with the processing module may be adapted for processing capsules of a first type having a first size and capsules of a second type having a second size. The capsule positioner being adapted to hold a capsule of the first or the second type. The beverage preparation machine may further comprise a size sensing arrangement configured to:
- detect a presence of a capsule in the positioner;
- determine a size information by measuring a size of said detected capsule and comparing said measured size to the first and the second size;
- send the size information to the processing module.

In particular, the first and the second type of capsules have different dimensions and/or volumes for containing the ingredient. The machine may be adapted to handle more than two types of capsules.

Consequently, the user only needs to put a capsule of the first or the second type in the positioner for preparing a beverage and the machine can be configured to automatically handle the transfer of the capsule from the capsule positioner to the processing module and/or the processing parameters for the capsule. This simple, quick and intuitive gesture does not require the user to provide the information of the type of capsule he has chosen. The processing module, knowing the type of capsule that the user has positioned into the positioner, can use this information for adapting/configuring itself for handling this kind of capsule, and/or to adapt the preparation process according to this information, for example by adjusting the volume of water used according to the type of capsule. Moreover, the positioner can be placed outside the processing module, in particular outside a brewing unit of the ingredient processing module, and preferably in a position where it is visible and accessible to the user, so that the latter may have a visual feedback. Consequently, if an object is received by the positioner and is not detected as a capsule, the user can more easily remove it from the positioner. The level of safety of the machine is thus improved.

In particular, the size sensing arrangement may be adapted to detect the presence of a capsule in the positionner by receiving or reading information from the capsule, and/or by measuring at least one of the following characteristic of the capsule: spectral property, colour, electrical property, resistivity, capacitance, electromagnetic property, magnetic induced field, mechanical property, geometry, weight, identifying information, code bar, emitted or reflected signal.

In particular, the size sensing arrangement may be configured to detect a presence of a capsule in the positioner by detecting if a metallic object is present in the positioner.

The size sensing arrangement may comprise an inductive detection arrangement configured to detect a presence of a capsule in the positioner by producing with a sensing element an electro-magnetical field in the positioner and by detecting variations of said electro-magnetical field induced by the presence of a capsule of the first or the second type.

The size sensing arrangement may comprise a length-detection unit for determining the size information. In an embodiment the length-detection unit comprises a light-receiving device and a light-emitting device, both positioned in the capsule positioner so as that:
- a light, emitted by the light-emitting device, is reflected by a capsule of the second type when such a capsule is positioned in the positioner, and is being received by the light-receiving device;
- a light, emitted by the light-emitting device, is not reflected by a capsule of the first type when such capsule is positioned in the positioner, and/or is not being received by the light-receiving device.

In an embodiment, the size sensing arrangement may comprise a size-detection arrangement configured to determine the size information by determining a profile and/or a curvature and/or a shape of a part of a capsule positioned in the positioner, using a geometrical size sensing element for identifying whether said profile and/or said curvature and/or said shape correspond(s) to a part of a capsule of the first type or to a part of a capsule of the second type.

More particularly, the size sensing arrangement may comprise an inductive size-detection arrangement configured to determine the size information by producing with a size sensing element an electro-magnetical field in the positioner and by detecting variations of said electro-magnetical field induced by the presence of a capsule of the first or the second type, and by identifying whether said variations are induced by a capsule of the first type or by a capsule of the second type. For example, the inductive size-detection arrangement may comprise a field emitting element for producing an electro-magnetical field in the positioner, and a first field receiving element and a second field receiving element, the inductive size-detection arrangement being configured to determine the size information by producing with the field emitting element an electro-magnetical field in the positioner and by detecting variations of said electro-magnetical field observed on the first and the second field receiving element induced by the presence of a capsule of the first or the second type, and by identifying whether said variations are induced by a capsule of the first type or by a capsule of the second type.

The processing module may be configured to prepare a beverage according to parameters adapted to, or depending of, the size information.

The machine typically includes a control unit, in particular a unit for controlling the processing module. The movable, e.g. pivotable, member(s) may form or be part of a user-interface in data communication with the control unit, optionally the movable member(s) comprising or being associated with a sensor connected to the control unit for sensing a position of the member(s) such as a sensor selected from an electro-mechanical switch sensor, a magnetic sensor, an electromagnetic sensor and an optical sensor. The control unit may comprise a power management module arranged to power the control unit and optionally further electric components, such as a user-interface and/or a thermal conditioner in particular a heater, when the control unit is unpowered or in standby state and the cover moved, in particular into the uncovering position.

The machine may have a control unit for controlling the processing module, the control unit being arranged to initiate automatically beverage preparation when the ingredient capsule is inserted into the processing module and the movable member(s) is/are moved into the releasing position. Insertion of the ingredient capsule into the module may be detected by any system, e.g. as known in the art such as an optical detection. The movable member(s) may also be used as a main switch to power the machine.

The machine may comprise a lock for locking the movable member(s) when an ingredient capsule is being processed in the processing module or when a service cycle is being carried out. The lock may be a hard lock, e.g. a mechanical lock interfering with the motion of the movable member(s), and/or a soft lock, e.g. a program controlling an actuator connected to the movable member(s) to bring and/or maintain the movable member(s) in a desired position.

The movable member(s) may be configured to interrupt ingredient processing in the module when the movable member(s) is actuated away from its position during ingredient processing, e.g. manually or (semi-) automatically.

The movable member(s) can be arranged to confine fluid within the passage. Typically, the movable member(s) may form a safety barrier to prevent liquid or vapour projections outside the passage during or at the end of ingredient processing in the processing module.

The movable member(s) may include one or more small through-openings for allowing the release of vapour and avoid accumulation of moisture under the member(s) during or at the end of ingredient processing in the processing module. Additionally or alternatively, a periphery of the member(s) may delimit part of openings through which such vapour may be released during or at the end of ingredient processing in the processing module.

The processing module can be configured to circulate automatically a mixing and/or infusion liquid to the ingredient when the first and second assembly reach the processing position, e.g. the closed position.

Hence, a beverage machine with a simple and space-saving capsule positioner for supplying a capsule to a processing module can be provided to:
- control the access to the capsule insertion passage and the processing module;
- act as a user-interface to control the operation of the machine; and/or
- prevent undersirable user operations, e.g. open the ingredient processing module in the course of processing.

Another aspect of the invention concerns a method of inserting an ingredient capsule into the processing module of such a machine as well as a method for preparing a beverage from a capsule in such a machine.

While or even before the processing module is processing an ingredient capsule for preparing a beverage, the capsule positioner may be arranged so that it is able to move back into its receiving and holding position and to receive properly an ingredient capsule for a subsequent beverage preparation. The proper and early prepositioning of the capsule may reduce the time needed to empty and refill the processing module between two beverage preparations. Of course, it is also possible to mount an ingredient feeder such as a reservoir, e.g. a cartridge of capsules, on the capsule positioner so that a series of successive beverage servings can be prepared, e.g. automatically or semi-automatically, without having to manually position individual capsules for their insertion into the processing module.

A further aspect of the invention concerns a combination of a machine and a capsule.

Yet another aspect of the invention concerns the use of a capsule for the above described machine, methods or combination.

### Brief Description of the Drawings

The invention will now be described with reference to the schematic drawings, wherein:
- Figure 1 illustrates part of a beverage machine with a capsule positioner according to the invention;
- Figures 2a to 2c illustrate an operative sequence of a capsule positioner of the machine of Fig. 1; and
- Figure 3a, 3b, 3c, 3d and 3e are detailed views of a capsule positioner of another embodiment of a beverage preparation machine according to the invention.

### Detailed description

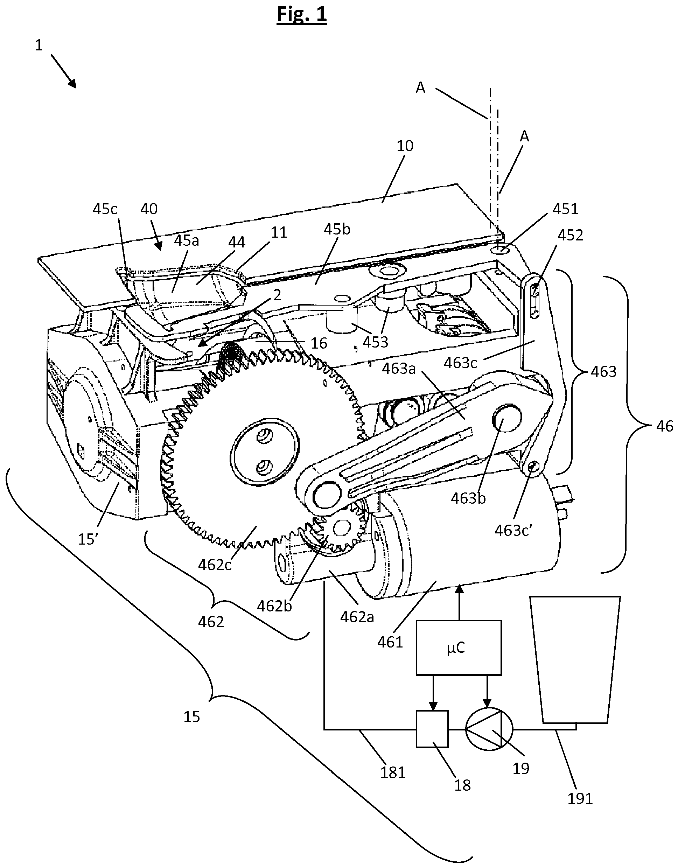

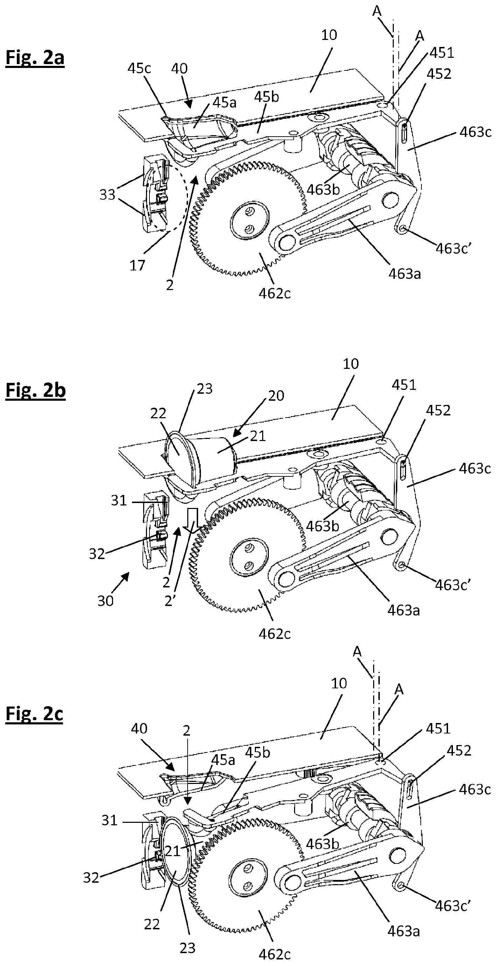

Figures 1, 2a to 2c illustrate an exemplary embodiment of part of a beverage preparation machine 1 in accordance with the invention. Machine 1 has a capsule positioner 40 shown in its environment in Fig. 1 and in different configurations in Figs 2a to 2c. In Fig. 2a, positioner 40 is ready to receive a capsule 20. In Fig. 2b, positioner 40 has received capsule 20 and holds it. In Fig. 2c, positioner 40 is shown in a configuration in which it has released capsule 20.

Machine 1 includes: a capsule ingredient processing module 15 that can be mounted in a frame 15'. Processing module 15 is associated with a passage 2 for the transfer of a capsule 20 along a direction 2' from positioner 40 to processing module 15.

Capsule positioner 40 can have at least one movable member 45a,45b which delimits a seat 44 for receiving capsule 20, member(s) 45a,45b being movable from (a) a position for receiving and holding said capsule to (b) a position for releasing said capsule into the passage and vice versa.

Capsule 20 (shown in Fig. 2b) is of the type described above under the header "field of the invention". Capsule 20 may have a container-body 21, e.g. a generally cup-shaped body, having a flange 23 at a rim of body 21 to which a lid 22 is attached, in particular sealed. Suitable capsules are for example disclosed in EP 0 512 468 und EP 0 512 470.

As illustrated in Figs 1 and 2a, module 15 can have a chamber formed by a closure of assemblies 16,17 for receiving and housing therein capsule 20 supplied into machine 1 via passage 2. Processing module 15 may be configured to circulate a liquid into the chamber, typically for mixing with the ingredient in particular for brewing the capsule's ingredient. For instance, the chamber is delimited by a first assembly 16, e.g. an upstream assembly, and a second assembly 17, e.g. a downstream assembly. For instance, one assembly 16 is a water injection assembly and another assembly is a beverage dispensing assembly 17. For example, assembly 16 forms a cage for receiving capsule 20 and assembly 17 forms a beverage delivery plate associated with a beverage outlet (not shown). In Figs 1 and 2a, assemblies 16,17 are shown in their spaced apart open position prior to enclosing or capturing capsule 20.

The chamber 16,17 may be configured for holding and housing a capsule 20 containing a flavouring ingredient, such as tea or coffee or chocolate or powder milk. As mentioned above.

A flavoured beverage may be prepared by circulating a carrier liquid, such as water, into the ingredient chamber to flavour the liquid by exposure to the flavouring ingredient held in chamber 16,17.

First and second assemblies 16,17 can be relatively movable between a processing configuration for housing therein capsule 20 and a transfer configuration for inserting such capsule into processing module 15 and/or for evacuation thereof from processing module 15. An automatic ingredient recognition system may be used to parameterize and adjust the processing of the capsule automatically in line with the recognized capsule type.

When closed capsules 20 of flavouring ingredients are used, first and second assemblies 16,17 delimiting the ingredient chamber may include a capsule opener such as blades and/or a tearing tool, e.g. a plate with a tearing profile, for instance as known from Nespresso™ machines. See for example EP 0 512 468 und EP 0 512 470.

Beverage machine 1 typically includes one or more of the following components:
a) Processing module 15, e.g. a fluid circuit including a brewing unit 16,17, delimiting in the processing position the chamber for receiving and housing ingredient capsule 20 and for guiding via an inlet an incoming flow of liquid for flavouring thereof, such as water, through this ingredient to a beverage outlet;
b) an in-line heater 18 for heating this flow of liquid to be supplied to ingredient capsule 20;
c) a pump 19 for pumping liquid through in-line heater 18;
d) one or more fluid connecting members 181,191 for guiding liquid from a source of liquid, such as tank of liquid (upstream pump 19);
e) an electric control unit µC, in particular comprising a printed circuit board (PCB), for receiving instructions from a user via an input user-interface and for controlling in-line heater 18 and pump 19 and possibly brewing unit 16,17 and capsule positioner 40; and/or
f) one or more sensors for sensing at least one characteristic selected from characteristics of processing module 15, in-line heater 18, pump 19, capsule positioner 40, capsule 20, a liquid tank, an ingredient collector, a flow of the liquid (e.g. by a flowmeter), a pressure of the liquid and a temperature of the liquid, and for communicating such characteristic(s) to the control unit.

In particular, processing module 15 includes or is connected to an upstream fluid arrangement, e.g. incorporating a liquid driver, such as a pump 19, and a thermal conditioner, such as a heater 18, for circulating thermally conditioned liquid, such as water, from a source, e.g. a liquid reservoir, into the ingredient processing chamber. Examples of upstream fluid arrangements are disclosed in WO 2009/074550 and in WO 2009/130099. The heater may be a thermoblock or an on demand heater (ODH), for instance an ODH type disclosed in EP 1 253 844, EP 1 380 243 and EP 1 809 151.

Examples of suitable brewing units delimiting brewing chambers and suitable capsule management are for example disclosed in WO 2005/004683, WO2007/135136 and WO 2009/043630, which are hereby incorporated by way of reference. Suitable fluid circuits of processing modules are for instance disclosed in WO 2009/074550 and WO 2009/130099, which are hereby incorporated by way of reference. Control unit configurations and connections are for example disclosed in WO 2009/043851 and WO 2009/043865.

Moreover, processing module 15 typically includes a downstream fluid arrangement leading into an outlet for dispensing beverage to a user, e.g. to an area for placing a user-cup or a user-mug, the beverage formed in the brewing chamber containing the ingredient mixed with the circulating liquid. The dispensing area may be delimited at the bottom by a support surface for holding a user cup or mug. Such support surfaces are well known in the art, e.g. as disclosed in EP 1 867 260 and WO 2009/074557.

In the particular embodiment shown in Figs 1 to 2c, machine 1 (partly illustrated) has a housing 10, capsule positioner 40 being located at a top part of housing 10. Positioner 40 may be integral with or simply associated to housing 10, e.g. assembled or juxtaposed thereto.

Movable member(s) 45a,45b may be manually or automatically or semi-automatically actuated from the receiving and holding position to the releasing position and/or vice versa.

For instance, a movable member 45a,45b may be driven by an actuator 46, in particular by a motor 461 and a transmission arrangement 462,463. Such motor 461 can be controlled by a control unit µC, in particular a control unit that controls heater 18 and pump 19 and possibly other machine functions. Motor 461 may also be used to relatively move assemblies 16,17. Transmission arrangement 462,463 may include a gear transmission 462, such as a toothed gear transmission coupled to a lever transmission 463. A cam and/or belt transmission could also have be used. For instance, the gear transmission 462 includes cooperating toothed gears 462a-462c. The toothed gears can comprise a worm drive 462a mounted on the rotor of motor 461 which drives via at least one worm wheel 462b a toothed wheel 462c. Transmission arrangement 462,463 can include a lever transmission 463 that has a connecting rod 463a pivotally mounted to wheel 462c and driving a shaft 463b which in turn drives lever 463c pivotally mounted at an extremity 463c'. Lever 463c may be elastically constrained against driving shaft 463b. Alternatively, the lever may include an elongated guiding groove in which the shaft can slide. Another extremity of lever 463 can be connected to a connector 452 of movable member 45a,45b to drive it between the receiving and holding position and the releasing position. Connector 452 can form a protrusion extending and into a groove of the lever's extremity and sliding therein. Movable member 45a,45b may be supported by frame 15', e.g. via feet 453 of member 45a,45b. A spring element may be connected to at least one of feet 453 to urge member 45a,45b into the receiving and holding position or into the releasing position. Movable member 45a,45b may be pivotally mounted at pivoting location 451. Location 451 may be located between seat 44 and connector 452. Alternatively, the connector may be located between the pivoting location and the seat (not shown).

Movable member(s) 45a,45b of capsule positioner 40 may be arranged to: hold capsule 20 generally vertically above passage 2 in the receiving and holding position (Fig. 2b) ; and drop capsule 20 generally vertically from capsule positioner 40 into passage 2 in the releasing position (Fig. 2c).

Transfer direction 2' may be generally straight and generally vertical extending from the position of capsule 20 when held by movable member(s) 45a,45b.

Capsule 20 may be transferred via passage 2 to an intermediate position for being handled by processing module 15, in particular by assemblies 16,17, into an extraction configuration in processing module 15, in particular inbetween assemblies 16,17. Upon extraction, processing module 15, e.g. assemblies 16,17, may bring capsule 20 into a removal configuration from where capsule 20 is manually and/or preferably automatically, e.g. under the effect of gravity or another force, ejected for instance to a used capsule collector.

Member(s) 45a,45b can be pivotable between (a) the receiving and holding position and (b) the releasing position, in particular pivotable about a pivoting axis A that is distant from seat 44. Member(s) 45a,45b may be pivotable from (a) the receiving and holding position to (b) the releasing position by an angle of less than 100 deg, in particular less than 75 deg, such as less than 45 deg, more particularly less than 30 deg, for example less than 15 or 10 deg. In the embodiment illustrated in Figs 2a to 2c, the angle is of the order of 10-15 deg.

Machine 1 may have a stationary outer envelope 10, such a frame or a housing portion 10 or virtual boundaries, at which movable member(s) 45a,45b is/are located in the receiving and holding position, movable member(s) 45a,45b being confined within envelope 10 in the releasing position. As illustrated in Figs 1 to 2c, member(s) 45a,45b may be arranged to move inside and/or underneath housing portion 10.

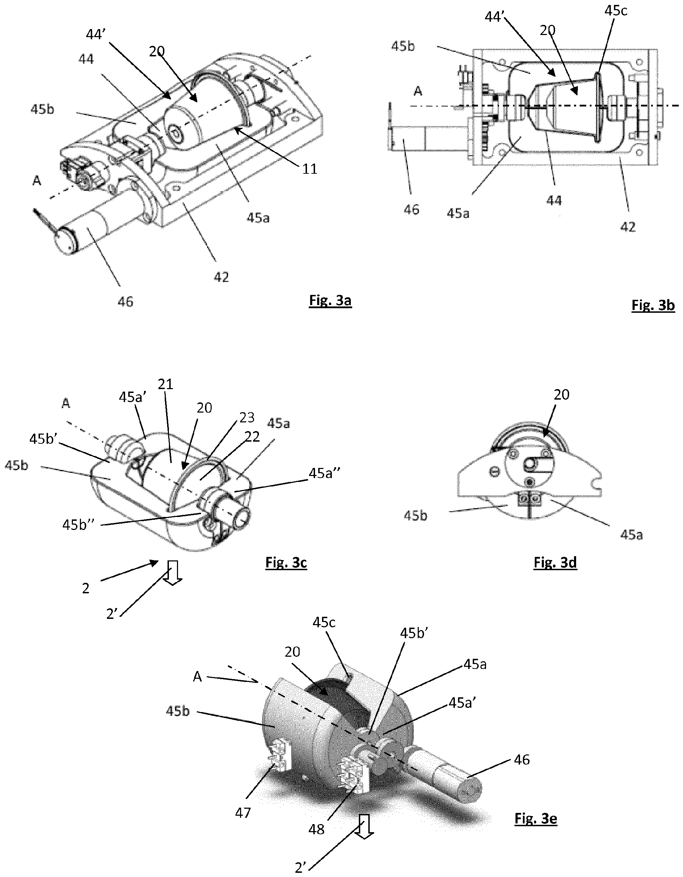

Machine 1 can have a mouth 11, in particular a mouth in outer envelope 10 or a virtual mouth (the latter being indicated in Figs 3a), for an insertion of capsule 20 into seat 44 in the receiving and holding position, movable member(s) (45a,45b) being movable away from mouth 11 when moved from the receiving and holding position to the releasing position. Optionally, movable member(s) 45a,45b form(s) (a) trap door(s) adjacent to the mouth. Movable member(s) 45a,45b may be pivotable:
- away from mouth 11 about a pivoting axis A that is generally perpendicular to mouth 11, optionally distant from mouth 11, or (not shown in Figs 1 to 2b but in Figs 3a to 3e) generally parallel to the mouth; and/or
- about axis A of pivotable member 45a,45b, which axis A extends: generally parallelly to transfer direction 2' of capsule 20 along passage 2; and/or generally perpendicularly to envelope 10 at capsule positioner 40 and/or generally parallelly to passage 2.

Capsule positioner 40 can comprise two or more movable members 45a,45b that are movable together above passage 2 into the receiving and holding position and movable apart from above passage 2 into the releasing position. For example, capsule positioner 40 has two movable members 45a,45b, in particular generally plate-shaped members optionally delimiting a recess forming a bottom of seat 44, each having a pivoting axis A, movable members 45a,45b being in a general scissor configuration that can be closed into the receiving and holding position and opened into the releasing position. In Figs 1 to 2c, for instance, two members 45a,45b are shown to be pivotable in opposite directions, each being pivotable about a respective axis A.

Seat 44 can have a shape configured to generally match a shape of capsule 20, in particular a shape that is generally conical or cylindrical to match a correspondingly shaped body 21 of capsule 20. Seat 44 may have guides 45c arranged to match a correspondingly shaped capsule flange 23, e.g. a rim 23 of a capsule body 21 which is joined to a lid 22 closing body 21.

Machine 1 may include guiding means 30 for guiding capsule 20 in passage 2. Optionally the guiding means can have guide members 31 guiding a capsule flange 23 and/or being associated with stop members 32 for stopping capsule 20, e.g. stopping capsule flange 23, in a position for being handled by processing module 15. Capsule positioner 40 can have a seat 44 that has guides 45c for guiding capsule 20, in particular capsule flange 23, into guiding means 30 in passage 2.

Typically guide members 31 are part of or delimit part of passage 2. Guide members 31 may be associated with at least one of assemblies 16,17. For instance, guide members have a connecter, e.g. a receiving recess 33, for securing at least one of assemblies 16,17, for example a generally plate-shaped assembly 17, as shown in Figs 1 and 2a.

In a particular embodiment, capsule positioner 40 and passage 2 and processing module 15 are adapted to handle a capsule 20 of a first type and of a second type. For instance, they may be configured so that:
- the capsule positioner comprises a first guide for guiding a flange of the first capsule type and a second guide for guiding a flange of the second capsule type (not shown in Figs 1 to 2c); and/or
- processing module 15 has assemblies 16,17 adapted for a selective insertion of capsule 20 of a first type or of a second type when assemblies are in an open position, processing module 15 being arranged to adapt the configuration of assemblies 16,17 and/or of brewing chamber 16,17 according to the type of the inserted capsule.

In Figs 3a to 3e, in which the same numeric references designate the generally same or similar elements, another exemplary embodiment of a capsule positioner 40 is illustrated.

Machine 1 includes a capsule positioner 40 having at least one member 45a,45b that is pivotable about a pivoting axis A from a position for receiving capsule 20 and holding capsule 20 (Figs 3a to 3d) to a position for releasing capsule 20 (not shown) into passage 2 via an transitional position of capsule positioner 40 (Fig. 3e). Pivoting axis A extends through an area 44' occupied by capsule 20 when held by pivotable member(s) 45a,45b, as illustrated in Figs 3a and 3b. Pivoting axis A of pivotable member(s) may extend: generally perpendicularly to transfer direction 2' of capsule 20 along passage 2; and/or generally parallelly to a machine housing at the capsule positioner (the housing is not shown in Figs 3a to 3e but is analogous to the one shown in Fig. 1). Alternatively, pivoting axis A may extend generally parallelly to the passage or generally perpendicularly to the machine housing (not shown). Area 44' can be delimited, at least in part, by a capsule reception and holding recess 44 formed by the pivotable member(s) 45a,45b. For instance, pivotable member(s) 45a,45b can be in the shape of and mounted like a swing, recess 44 being for instance delimited by the base (seat) and suspending arms of the swing; and pivoting axis A being at a location 45a',45a'';45b',45b'' of the suspending arms at a distance of the seat.

As illustrated in Figs 3a to 3e, at least one pivotable member 45a,45b may delimit at least part of a seat 44 for receiving and holding capsule 20. Seat 44 can have a shape configured to generally match a shape of capsule 20. For instance, seat 44 has a shape that is generally conical or cylindrical to match a correspondingly shaped capsule body 21. Furthermore, seat 44 may have guides 45c arranged to match a correspondingly shaped capsule flange 23, in particular a rim 23 of a capsule body 21 which is joined to a lid 22 closing body 21.

For example, capsule positioner 40 comprises a pair of pivotable members 45a,45b delimiting at least part of seat 44. Members 45a,45b may be pivotable in opposite pivoting direction about pivoting axis A.

Pivotable member(s) 45a,54b may form a shell, in particular a shell pivotally mounted at one or two extremities 45a',45a'';45b',45b'' of the shell.

At least one pivotable member 45a,54b can be located: in its member position for receiving and holding capsule 20, between area 44' and passage 20; and in its position for releasing capsule 20 into passage 2, above area 44' and/or sideways said area 44' and passage 20.

Movable member(s) 45a,45b of capsule positioner 40 may be arranged to: hold capsule 20 generally vertically above passage 2 in the receiving and holding position; and drop capsule 20 generally vertically from capsule positioner 40 into passage 2 in the releasing position.

Similarly to the embodiment shown in Figs 1 to 2c, machine 1 can comprise guiding means for guiding capsule 20 in passage 2. Guiding means may comprise guide members that are dimensioned to guide capsule flange 23 and/or that are associated with stop members for stopping capsule 20, in particular stopping capsule flange 23, in a position for being handled by the processing module.

Figs 3a to 3e illustrate how a small capsule 20 is received, held and released from capsule positioner 40, capsule flange 23 being received by guides 45c and capsule body 21 occupying only part of seat 44; the flange of a long capsule could be received in guides 45c and the long capsule body could extend over the entire seat 44. Alternatively, it is also possible to use capsules that have different flanges that cooperate with different guides in the seat. In any case, the processing module should then be so adapted that the assemblies and chamber are adjusted to the dimensions of the large or small capsule, for instance as taught in co-pending applications EP 2012187716.1, EP 2012187717.9, EP 2012187718.7, EP 2012197961.1 and EP 2012189153.5.

Similarly to the embodiment shown in Figs 1 to 2c, capsule seat 44 formed by pivotable members 45a,45 can be mounted in a frame 42 that may be integral with or adjacent to the (not shown) envelope of beverage machine 1. Capsule positioner 40 has two movable pivotable members in the shape of shells 45a,45b forming the base of capsule seat 44 when capsule positioner 40 is in the position illustrated in Figs 3a to 3d. The two movable shells 45a,45b may be provided with notches 45c for guiding the introduction and the positioning of a capsule 2 into seat 44. The shells may be displaced by a motorized mechanism 46 to switch the position illustrated in Figs 3a to 3d, i.e. a capsule receiving and holding position, and the transitional position illustrated in Fig. 3e before reaching the capsule releasing position where capsule 20 drops out of positioner 40 under the effect of gravity (not shown). More particularly, each shell may be rotated along a longitudinal axis A by motorized mechanism 46 to move each shell around capsule 20 from below capsule 20 to above capsule 20 so as to allow capsule 20 to be released from seat 44, for example by allowing capsule 20 to fall down into brewing unit formed of corresponding assemblies 16,17 through transfer passage 2. Typically, capsule positioner 40 is positioned at the upper part of housing 10 of beverage machine 1 to let a capsule fall into the passage 20 under the effect of gravity, when capsule positioner 40 is brought into its capsule releasing position. Alternatively, the shells may be mechanically linked by a mechanical coupling means with or associated with a movable part of the brewing unit so as to switch between the receiving and holding position and the releasing position depending on whether the brewing unit is open or closed or moving between these two states. Guides 45c formed in the shells and surrounding capsule seat 44, are disposed to ease the positioning of capsule 20 by a user when capsule positioner 40 is in the receiving and holding position, and/or to improve the holding of capsule 20 in seat 44. Moreover, guides 45c may be arranged to guide the movement of capsule 20 when capsule positioner 40 is switched to its releasing position, and to prevent a capsule 20 inserted into seat 44 to be translated within capsule positioner 40, for example when capsule positioner 40 is switched from the receiving and holding position to the releasing position.

Beverage machine 1 may comprise a capsule-length detector 47 and/or a sensor 48 for sensing the position of pivotable member 45a. Capsule detector 47 can be adapted to detect the presence on capsule seat 44 of capsule 20 and to identify whether the detected capsule is of a first or a second type different to the first type. More particularly, the capsule-length detector may be configured to determine the type of the capsule according to the length of the capsule. For example, the capsule-length detector may be configured to detect the presence of a metallic capsule in the seat, and then, determine if the detected capsule is of the first type or the second type by checking if the maximum length of said capsule along its axis of symmetry is sensibly equal to a first length L1 or to a second length L2 corresponding respectively to the first capsule type and second capsule type. Such a detection is for example disclosed in co-pending application EP 2012187762.5.

In the embodiments of Figs 1 to 3e, capsule 20 may be inserted into processing module 15 of machine 1 in the following manner:
- capsule 20 is received and held by movable member(s) 45a,45b of capsule positioner 40;
- member(s) 45a,45b is/are moved, e.g. pivoted about pivoting axis A, to the position for releasing capsule 20 and capsule 20 is released into the passage 2; thereafter
- capsule 20 is transferred via the passage 2 to chamber 16,17 of processing module 15.

Capsule 20 can be immobilized in guide 31 on stop members 32, for example flange 23 of capsule 20 may rest on stop members 32 to immobilize capsule 20. In this position, capsule 20 is in position to be handled by processing module 15.

A beverage can be prepared after transferring the capsule 20 to the chamber 16,17 of processing module 15, for example by capturing or enclosing capsule 20 by assemblies 16,17 that are relatively moved from an open position to a closed position (not shown).

Machine 1 may have a collector receptacle (not shown) for collecting used ingredient capsules, such as tea leaves or ground coffee within used capsules, and waste liquid. Collector receptacle may be insertable, e.g. slidable, into a cavity formed in machine 1 and removable therefrom for servicing, e.g. emptying the solids and/or liquids contained therein.

Further details of such a machine 1, in particular relating to the processing module, beverage outlet, control unit and the motorization are for example disclosed in WO 2012/025258 and WO 2012/073758.

## Claims

1. A machine (1) for preparing a beverage from an ingredient capsule (20), comprising:
- an ingredient capsule processing module (15) having a chamber (16,17) for processing said capsule therein;
- a passage (2) for a transfer of said capsule to the chamber; and
- a capsule positioner (40) having at least one member (45a,45b) which delimits a seat (44) for receiving a capsule, the movable member(s) being movable from a position for receiving and holding said capsule to a position for releasing said capsule into the passage, the movable member(s) (45a,45b) is/are arranged to:
- hold said capsule generally vertically above the passage in the receiving and holding position; and
- drop said capsule generally vertically from the capsule positioner into the passage in the releasing position,
optionally, the transfer of said capsule extending along a generally straight and generally vertical direction (2') from a position of said capsule when held by the movable member(s) along the passage (2),
**characterised in that** the machine comprises guiding means (30) for guiding the capsule (20) in the passage (2) the guide means comprising guide members (31) for guiding a capsule flange (23), wherein the capsule positioner (40) has a seat (44) that has guides (45c) for guiding said flange into the guiding means (30) in the passage (2).

2. The machine of claim 1, wherein said at least one member (45a,45b) is pivotable between:
- the receiving and holding position; and
- the releasing position,
preferably pivotable about a pivoting axis (A) that is distant from said seat.

3. The machine of claim 1 or 2, wherein said at least one member (45a,45b) is pivotable from the receiving and holding position to the releasing position by an angle of less than 100 deg, in particular less than 75 deg, such as less than 45 deg, more particularly less than 30 deg, for example less than 15 or 10 deg.

4. The machine of any preceding claim, which has a stationary outer envelope (10), such a frame or a housing portion (10) or virtual boundaries, at which the movable member(s) (45a,45b) is/are located in the receiving and holding position, the movable member(s) in the releasing position being confined within the envelope.

5. The machine of any preceding claim, which has a mouth (11), in particular a mouth in an outer envelope (10) of such machine (1), for an insertion of said capsule (20) into the seat (44) in the receiving and holding position, the movable member(s) (45a,45b) being movable away from the mouth when moved from the receiving and holding position to the releasing position, optionally the movable member(s) (45a,45b) forming (a) trap door(s) adjacent to the mouth.

6. The machine of any preceding claim 5, wherein the movable member(s) (45a,45b) is/are pivotable:
- away from a mouth (11), in particular a mouth in an outer envelope (10) of such machine (1), about a pivoting axis (A) that is generally perpendicular to the mouth, optionally distant from the mouth, or generally parallel to the mouth; and/or
- about an axis (A) of the at least one pivotable member, which axis extends:
- generally parallelly to a transfer direction (2') of said capsule (20) along the passage (2); and/or
- generally perpendicularly to a machine housing (10) at the capsule positioner (40) and/or generally parallelly to the passage,

7. The machine of any preceding claim, wherein the capsule positioner (40) comprises two or more movable members (45a,45b) that are movable together above the passage (2) into the receiving and holding position and movable apart from above the passage (2) into the releasing position.

8. The machine of claim 7, wherein the capsule positioner (40) comprises two movable members (45a,45b), in particular generally plate-shaped members, each having a pivoting axis (A), the movable members being in a general scissor configuration that can be closed into the receiving and holding position and opened into the releasing position.

9. The machine of claim 7 or 8, which comprises two members (45a,45b) that are pivotable in opposite directions about the pivoting axis (A).

10. The machine of any preceding claim, wherein the seat (44) has a shape configured to generally match a shape of said capsule (20), in particular a shape that is generally conical or cylindrical to match a correspondingly shaped body (21) of said capsule (20).

11. The machine of claim 10, wherein the seat (44) has guides (45c) arranged to match a correspondingly shaped capsule flange (23), in particular a rim (23) of a capsule body (21) which is joined to a lid (22) closing the body (21).

12. The machine of any preceding claim, wherein the guide means (30) are associated with stop members (32) for stopping said capsule, in particular stopping the capsule flange, in a position for being handled by the processing module (15).

13. The machine of any preceding claim, wherein the capsule positioner (40) and the passage (2) and the processing module (15) are adapted to handle a capsule (20) of a first type and of a second type, optionally:
- the capsule positioner comprising a first guide for guiding a flange of the first capsule type and a second guide for guiding a flange of the second capsule type; and/or
- the processing module (15) comprising assemblies (16,17) adapted for a selective insertion of a capsule (20) of a first type or of a second type when the assemblies are in an open position, the processing module (15) being arranged to adapt the configuration of the assemblies (16,17) and/or of the brewing chamber (16,17) according to the type of the inserted capsule (20).

14. The machine of any preceding claim, wherein the capsule positioner (40) is located above the ingredient processing module (15) and the passage (2), optionally the capsule positioner (40), the ingredient processing module (15) and the passage (2) are configured so that said capsule (20) can be driven by gravity from the capsule positioner to the processing module.

15. A method of inserting an ingredient capsule (20) into the processing module (15) of the machine (1) defined in any preceding claim, for preparing a beverage from the capsule (20), comprising the steps of:
- receiving and holding the capsule (20) by said at least one movable member (45a,45b) of the capsule positioner (40) in the receiving and holding position, whereby the capsule is received and held by the movable member generally vertically above the passage in the receiving and holding position;
- moving said at least one member (45a,45b) to the releasing position and releasing said capsule (20) into the passage (2), whereby the capsule is dropped generally vertically from the capsule positioner into the passage; and
- transferring the capsule (20) via the passage (2) to the chamber (16,17) of the processing module (15).
**characterised in that** the machine comprises guiding means (30) for guiding the capsule (20) in the passage (2) the guide means comprising guide members (31) for guiding a capsule flange (23), wherein the capsule positioner (40) has a seat (44) that has guides (45c) for guiding said flange into the guiding means (30) in the passage (2),
whereby method further comprise guiding the flange of the capsule from the guides (45c) to the guide members (30) .

16. The method of claim 15 wherein a beverage is prepared after transferring the capsule (20) to the chamber (16,17) of the processing module (15).

17. A combination of a machine (1) and a capsule (20), wherein the machine and the capsule are arranged to carry out the method defined in claim 14 or 15 and/or wherein the machine is a machine as defined in any one of claims 1 to 14 and wherein the capsule is: held generally vertically above the passage in the receiving and holding position; and dropped capsule generally vertically from the capsule positioner into the passage in the releasing position.

18. Use of a capsule (20) for:
- being inserted into a machine as defined in any one of claims 1 to 14
- being inserted into a machine according to a method as defined in claim 15 or 16 or
- providing a combination as defined in claim 17.

## Patentansprüche

1. Maschine (1) zum Zubereiten eines Getränks aus einer Inhaltsstoffkapsel (20), umfassend:
- ein Inhaltsstoffkapselverarbeitungsmodul (15) mit einer Kammer (16, 17) zum Verarbeiten der Kapsel darin;
- einen Durchgang (2) für eine Überführung der Kapsel in die Kammer und
- einen Kapselpositionierer (40) mit mindestens einem Element (45a, 45b), das einen Sitz (44) zum Aufnehmen einer Kapsel begrenzt, wobei das/die bewegliche(n) Element(e) von einer Position zum Aufnehmen und Halten der Kapsel in eine Position zum Freigeben der Kapsel in den Durchgang beweglich ist/sind,
das/die bewegliche(n) Element(e) (45a, 45b) angeordnet ist/sind, um:
- die Kapsel im Allgemeinen vertikal über dem Durchgang in der Aufnahme- und Halteposition zu halten und
- die Kapsel im Allgemeinen vertikal aus dem Kapselpositionierer in den Durchgang in der Freigabeposition fallen zu lassen,
wobei die Überführung der Kapsel sich optional entlang einer im Allgemeinen geraden und im Allgemeinen vertikalen Richtung (2') von einer Position der Kapsel erstreckt, wenn sie von dem/den beweglichen Element(en) entlang des Durchgangs (2) gehalten wird,
**dadurch gekennzeichnet, dass** die Maschine Führungsmittel (30) zum Führen der Kapsel (20) in dem Durchgang (2) umfasst, wobei die Führungsmittel Führungselemente (31) zum Führen eines Kapselflansches (23) umfassen, wobei der Kapselpositionierer (40) einen Sitz (44) aufweist, der Führungen (45c) zum Führen des Flansches in die Führungsmittel (30) in dem Durchgang (2) aufweist.

2. Maschine nach Anspruch 1, wobei das mindestens eine Element (45a, 45b) schwenkbar ist zwischen:
- der Aufnahme- und Halteposition und
- der Freigabeposition,
vorzugsweise schwenkbar um eine von dem Sitz beabstandete Schwenkachse (A).

3. Maschine nach Anspruch 1 oder 2, wobei das mindestens eine Element (45a, 45b) von der Aufnahme- und Halteposition in die Freigabeposition um einen Winkel von weniger als 100 Grad, insbesondere weniger als 75 Grad, beispielsweise weniger als 45 Grad, noch spezieller weniger als 30 Grad, beispielsweise weniger als 15 oder 10 Grad, schwenkbar ist.

4. Maschine nach einem vorhergehenden Anspruch, die eine stationäre äußere Hülle (10), einen solchen Rahmen oder einen Gehäuseabschnitt (10) oder virtuelle Grenzen aufweist, an denen sich das/die bewegliche(n) Element(e) (45a, 45b) in der Aufnahme- und Halteposition befindet/befinden, wobei das/die bewegliche(n) Element(e) in der Freigabeposition innerhalb der Hülle eingeschlossen ist/sind.

5. Maschine nach einem vorhergehenden Anspruch, die eine Öffnung (11), insbesondere eine Öffnung in einer äußeren Hülle (10) einer solchen Maschine (1), zum Einsetzen der Kapsel (20) in den Sitz (44) in der Aufnahme- und Halteposition aufweist, wobei das/die bewegliche(n) Element(e) (45a, 45b) beim Bewegen aus der Aufnahme- und Halteposition in die Freigabeposition weg von der Öffnung beweglich ist/sind, wobei das/die bewegliche(n) Element(e) (45a, 45b) optional (eine) Klapptür(en) neben der Öffnung bildet/bilden.

6. Maschine nach dem vorhergehenden Anspruch 5, wobei das/die bewegliche(n) Element(e) (45a, 45b) schwenkbar ist/sind:
- weg von einer Öffnung (11), insbesondere einer Öffnung in einer äußeren Hülle (10) einer solchen Maschine (1), um eine Schwenkachse (A), die im Allgemeinen senkrecht zu der Öffnung, optional entfernt von der Öffnung oder im Allgemeinen parallel zu der Öffnung ist; und/oder
- um eine Achse (A) des mindestens einen schwenkbaren Elements, wobei sich diese Achse erstreckt:
- im Allgemeinen parallel zu einer Überführungsrichtung (2') der Kapsel (20) entlang des Durchgangs (2) und/oder
- im Allgemeinen senkrecht zu einem Maschinengehäuse (10) am Kapselpositionierer (40) und/oder im Allgemeinen parallel zu dem Durchgang,

7. Maschine nach einem vorhergehenden Anspruch, wobei der Kapselpositionierer (40) zwei oder mehr bewegliche Elemente (45a, 45b) umfasst, die zusammen über dem Durchgang (2) in die Aufnahme- und Halteposition beweglich und von oberhalb des Durchgangs (2) in die Freigabeposition beweglich sind.

8. Maschine nach Anspruch 7, wobei der Kapselpositionierer (40) zwei bewegliche Elemente (45a, 45b) umfasst, insbesondere im Allgemeinen plattenförmige Elemente, die jeweils eine Schwenkachse (A) aufweisen, wobei die beweglichen Elemente sich in einer allgemeinen Scherenkonfiguration befinden, die in die Aufnahme- und Halteposition geschlossen und in die Freigabeposition geöffnet werden kann.

9. Maschine nach Anspruch 7 oder 8, die zwei Elemente (45a, 45b) umfasst, die in entgegengesetzte Richtungen um die Schwenkachse (A) schwenkbar sind.

10. Maschine nach einem vorhergehenden Anspruch, wobei der Sitz (44) eine Form aufweist, die so konfiguriert ist, dass sie im Allgemeinen mit einer Form der Kapsel (20) übereinstimmt, insbesondere einer Form, die im Allgemeinen konisch oder zylindrisch ist, um mit einem entsprechend geformten Körper (21) der Kapsel (20) übereinzustimmen.

11. Maschine nach Anspruch 10, wobei der Sitz (44) Führungen (45c) aufweist, die so angeordnet sind, dass sie mit einem entsprechend geformten Kapselflansch (23) übereinstimmen, insbesondere einem Rand (23) eines Kapselkörpers (21), der mit einem Deckel (22) verbunden ist, der den Körper (21) verschließt.

12. Maschine nach einem vorhergehenden Anspruch, wobei die Führungsmittel (30) mit Anschlagelementen (32) zum Anhalten der Kapsel, insbesondere zum Anhalten des Kapselflansches, in einer Position verbunden sind, die von dem Verarbeitungsmodul (15) gehandhabt werden kann.

13. Maschine nach einem vorhergehenden Anspruch, wobei der Kapselpositionierer (40) und der Durchgang (2) und das Verarbeitungsmodul (15) dazu eingerichtet sind, eine Kapsel (20) eines ersten Typs und eines zweiten Typs zu handhaben, optional:
- wobei der Kapselpositionierer eine erste Führung zum Führen eines Flansches des ersten Kapseltyps und eine zweite Führung zum Führen eines Flansches des zweiten Kapseltyps umfasst und/oder
- wobei das Verarbeitungsmodul (15) Baugruppen (16, 17) umfasst, die für ein selektives Einsetzen einer Kapsel (20) eines ersten Typs oder eines zweiten Typs eingerichtet sind, wenn die Baugruppen in einer offenen Position sind, wobei das Verarbeitungsmodul (15) dazu eingerichtet ist, die Konfiguration der Baugruppen (16, 17) und/oder der Brühkammer (16, 17) entsprechend dem Typ der eingesetzten Kapsel (20) anzupassen.

14. Maschine nach einem der vorhergehenden Ansprüche, wobei der Kapselpositionierer (40) oberhalb des Inhaltsstoffverarbeitungsmoduls (15) angeordnet ist und der Durchgang (2), optional der Kapselpositionierer (40), das Inhaltsstoffverarbeitungsmodul (15) und der Durchgang (2) so konfiguriert sind, dass die Kapsel (20) durch Schwerkraft von dem Kapselpositionierer zu dem Verarbeitungsmodul angetrieben werden kann.

15. Verfahren zum Einsetzen einer Inhaltsstoffkapsel (20) in das Verarbeitungsmodul (15) der Maschine (1), die in einem vorhergehenden Anspruch definiert ist, zur Zubereitung eines Getränks aus der Kapsel (20), umfassend die folgenden Schritte:
- Aufnehmen und Halten der Kapsel (20) durch das mindestens eine bewegliche Element (45a, 45b) des Kapselpositionierers (40) in der Aufnahme-und Halteposition, wobei die Kapsel im Allgemeinen vertikal oberhalb des Durchgangs in der Aufnahme- und Halteposition aufgenommen und gehalten wird;
- Bewegen des mindestens einen Elements (45a, 45b) in die Freigabeposition und Freigeben der Kapsel (20) in den Durchgang (2), wodurch die Kapsel im Allgemeinen vertikal von dem Kapselpositionierer in den Durchgang fallen gelassen wird; und
- Überführen der Kapsel (20) über den Durchgang (2) zu der Kammer (16, 17) des Verarbeitungsmoduls (15).
**dadurch gekennzeichnet, dass** die Maschine Führungsmittel (30) zum Führen der Kapsel (20) in dem Durchgang (2) umfasst, wobei die Führungsmittel Führungselemente (31) zum Führen eines Kapselflansches (23) umfassen, wobei der Kapselpositionierer (40) einen Sitz (44) aufweist, der Führungen (45c) zum Führen des Flansches in die Führungsmittel (30) in dem Durchgang (2) aufweist,
wobei das Verfahren ferner Führen des Flansches der Kapsel von den Führungen (45c) zu den Führungselementen (30) umfasst.

16. Verfahren nach Anspruch 15, wobei nach dem Überführen der Kapsel (20) zu der Kammer (16, 17) des Verarbeitungsmoduls (15) ein Getränk zubereitet wird.

17. Kombination einer Maschine (1) und einer Kapsel (20), wobei die Maschine und die Kapsel zur Durchführung des in Anspruch 15 oder 16 definierten Verfahrens eingerichtet sind und/oder wobei die Maschine eine Maschine, wie in einem der Ansprüche 1 bis 14 definiert, ist und wobei die Kapsel: im Allgemeinen vertikal über dem Durchgang in der Aufnahme- und Halteposition gehalten wird und die Kapsel im Allgemeinen vertikal von dem Kapselpositionierer in den Durchgang in der Freigabeposition fallen gelassen wird.

18. Verwendung einer Kapsel (20) zum:
- Eingesetztwerden in eine Maschine, wie in einem der Ansprüche 1 bis 14 definiert
- Eingesetztwerden in eine Maschine gemäß einem Verfahren, wie in Anspruch 15 oder 16 definiert, oder
- Bereitstellen einer Kombination, wie in Anspruch 17 definiert.

## Revendications

1. Machine (1) pour la préparation d'une boisson à partir d'une capsule d'ingrédient (20), comprenant :
- un module de traitement de capsules d'ingrédient (15) ayant une chambre (16, 17) pour traiter ladite capsule à l'intérieur de celle-ci ;
- un passage (2) pour un transfert de ladite capsule à la chambre ; et
- un dispositif de positionnement de capsule (40) ayant au moins un élément (45a, 45b) qui délimite un siège (44) pour recevoir une capsule, le ou les éléments mobiles étant mobiles d'une position pour recevoir et maintenir ladite capsule vers une position pour libérer ladite capsule dans le passage,
le ou les éléments mobiles (45a, 45b) étant agencés pour :
- maintenir ladite capsule généralement verticalement au-dessus du passage dans la position de réception et de maintien ; et
- laisser tomber ladite capsule généralement verticalement depuis le dispositif de positionnement de capsule dans le passage dans la position de libération, facultativement, le transfert de ladite capsule s'étendant le long d'une direction (2') généralement droite et généralement verticale à partir d'une position de ladite capsule lorsqu'elle est maintenue par le ou les éléments mobiles le long du passage (2),
**caractérisée en ce que** la machine comprend un moyen de guidage (30) pour guider la capsule (20) dans le passage (2), le moyen de guidage comprenant des éléments de guidage (31) pour guider une bride de capsule (23), le dispositif de positionnement de capsule (40) comportant un siège (44) qui a des guides (45c) pour guider ladite bride dans le moyen de guidage (30) dans le passage (2).

2. Machine selon la revendication 1, dans laquelle ledit au moins un élément (45a, 45b) peut pivoter entre :
- la position de réception et de maintien ; et
- la position de libération,
de préférence peut pivoter autour d'un axe de pivotement (A) qui est distant dudit siège.

3. Machine selon la revendication 1 ou 2, dans laquelle ledit au moins un élément (45a, 45b) peut pivoter de la position de réception et de maintien à la position de libération d'un angle inférieur à 100 degrés, en particulier inférieur à 75 degrés, comme inférieur à 45 degrés, plus particulièrement inférieur à 30 degrés, par exemple inférieur à 15 ou 10 degrés.

4. Machine selon une quelconque revendication précédente, qui comporte une enveloppe externe fixe (10), comme une partie de cadre ou de boîtier (10) ou des frontières virtuelles, au niveau de laquelle le ou les éléments mobiles (45a, 45b) sont situés dans la position de réception et de maintien, le ou les éléments mobiles dans la position de libération étant confinés à l'intérieur de l'enveloppe.

5. Machine selon une quelconque revendication précédente, qui présente une embouchure (11), notamment une embouchure dans une enveloppe externe (10) d'une telle machine (1), pour une insertion de ladite capsule (20) dans le siège (44) dans la position de réception et de maintien, le ou les éléments mobiles (45a, 45b) étant mobiles à l'opposé de l'embouchure lorsqu'ils sont déplacés de la position de réception et de maintien vers la position de libération, le ou les éléments mobiles (45a, 45b) formant facultativement une ou plusieurs portes de trappe adjacentes à l'embouchure.

6. Machine selon une quelconque revendication précédente 5, dans laquelle le ou les éléments mobiles (45a, 45b) peuvent pivoter :
- à l'opposé d'une embouchure (11), en particulier une embouchure dans une enveloppe externe (10) d'une telle machine (1), autour d'un axe de pivotement (A) généralement perpendiculaire à l'embouchure, facultativement distant de l'embouchure ou généralement parallèle à l'embouchure ; et/ou
- autour d'un axe (A) dudit au moins un élément pivotant, axe qui s'étend :
- généralement parallèlement à une direction de transfert (2') de ladite capsule (20) le long du passage (2) ; et/ou
- généralement perpendiculairement à un boîtier de machine (10) au niveau du dispositif de positionnement de capsule (40) et/ou généralement parallèlement au passage,

7. Machine selon une quelconque revendication précédente, dans laquelle le dispositif de positionnement de capsule (40) comprend deux éléments mobiles ou plus (45a, 45b) qui sont mobiles ensemble au-dessus du passage (2) vers la position de réception et de maintien et sont mobiles séparément depuis le dessus du passage (2) vers la position de libération.

8. Machine selon la revendication 7, dans laquelle le dispositif de positionnement de capsule (40) comprend deux éléments mobiles (45a, 45b), en particulier des éléments généralement en forme de plaque, chacun ayant un axe de pivotement (A), les éléments mobiles étant dans une configuration générale de ciseaux qui peuvent être fermés dans la position de réception et de maintien et ouverts dans la position de libération.

9. Machine selon la revendication 7 ou 8, qui comprend deux éléments (45a, 45b) pouvant pivoter dans des directions opposées autour de l'axe de pivotement (A).

10. Machine selon une quelconque revendication précédente, dans laquelle le siège (44) a une forme conçue pour correspondre généralement à une forme de ladite capsule (20), en particulier une forme généralement conique ou cylindrique pour correspondre à un corps (21) de forme correspondante de ladite capsule (20).

11. Machine selon la revendication 10, dans laquelle le siège (44) présente des guides (45c) agencés pour correspondre à une bride de capsule (23) de forme correspondante, en particulier un rebord (23) d'un corps de capsule (21) qui est relié à un couvercle (22) fermant le corps (21).

12. Machine selon une quelconque revendication précédente, dans laquelle les moyens de guidage (30) sont associés à des éléments de butée (32) pour arrêter ladite capsule, en particulier arrêter la bride de capsule, dans une position pour être manipulée par le module de traitement (15).

13. Machine selon une quelconque revendication précédente, dans laquelle le dispositif de positionnement de capsule (40) et le passage (2) et le module de traitement (15) sont adaptés pour manipuler une capsule (20) d'un premier type et d'un second type, facultativement :
- le dispositif de positionnement de capsule comprenant un premier guide pour guider une bride du premier type de capsule et un second guide pour guider une bride du second type de capsule ; et/ou
- le module de traitement (15) comprenant des ensembles (16, 17) adaptés pour une insertion sélective d'une capsule (20) d'un premier type ou d'un second type lorsque les ensembles sont en position ouverte, le module de traitement (15) étant agencé pour adapter la configuration des ensembles (16, 17) et/ou de la chambre d'infusion (16, 17) en fonction du type de la capsule insérée (20).

14. Machine selon une quelconque revendication précédente, dans laquelle le dispositif de positionnement de capsule (40) est situé au-dessus du module de traitement d'ingrédient (15) et du passage (2), le dispositif de positionnement de capsule (40), le module de traitement d'ingrédient (15) et le passage (2) étant facultativement conçus de sorte que ladite capsule (20) puisse être entraînée par gravité du dispositif de positionnement de capsule au module de traitement.

15. Procédé d'insertion d'une capsule d'ingrédient (20) dans le module de traitement (15) de la machine (1) définie dans une quelconque revendication précédente, pour la préparation d'une boisson à partir de la capsule (20), comprenant les étapes consistant à :
- recevoir et maintenir la capsule (20) par ledit au moins un élément mobile (45a, 45b) du dispositif de positionnement de capsule (40) dans la position de réception et de maintien, moyennant quoi la capsule est reçue et maintenue par l'élément mobile généralement verticalement au-dessus du passage dans la position de réception et de maintien ;
- déplacer ledit au moins un élément (45a, 45b) vers la position de libération et libérer ladite capsule (20) dans le passage (2), moyennant quoi la capsule est amenée à tomber généralement verticalement depuis le dispositif de positionnement de capsule dans le passage ; et
- transférer la capsule (20) par le passage (2) vers la chambre (16, 17) du module de traitement (15).
**caractérisé en ce que** la machine comprend un moyen de guidage (30) pour guider la capsule (20) dans le passage (2), le moyen de guidage comprenant des éléments de guidage (31) pour guider une bride de capsule (23), le dispositif de positionnement de capsule (40) comportant un siège (44) qui présente des guides (45c) pour guider ladite bride dans le moyen de guidage (30) dans le passage (2),
moyennant quoi le procédé comprend en outre le guidage de la bride de la capsule depuis les guides (45c) vers les éléments de guidage (30).

16. Procédé selon la revendication 15, dans lequel une boisson est préparée après le transfert de la capsule (20) à la chambre (16, 17) du module de traitement (15).

17. Combinaison d'une machine (1) et d'une capsule (20), dans laquelle la machine et la capsule sont agencées pour réaliser le procédé défini dans la revendication 15 ou 16 et/ou dans laquelle la machine est une machine selon l'une quelconque des revendications 1 à 14 et dans laquelle la capsule est : maintenue généralement verticalement au-dessus du passage dans la position de réception et de maintien ; et la capsule étant amenée à tomber généralement verticalement depuis le dispositif de positionnement de capsule dans le passage dans la position de libération.

18. Utilisation d'une capsule (20) pour :
- être insérée dans une machine telle que définie dans l'une quelconque des revendications 1 à 14
- être insérée dans une machine selon un procédé tel que défini dans la revendication 15 ou 16, ou
- produire une combinaison telle que définie dans la revendication 17.
